# EUROPÄISCHE PATENTSCHRIFT

(11) **EP 4 225 530 B1**
(45) Veröffentlichungstag und Bekanntmachung des Hinweises auf die Patenterteilung: **11.03.2026**
(21) Anmeldenummer: 21778416.4
(22) Anmeldetag: 17.09.2021
(51) Int. Cl.: B23K 26/70, G02B 6/42

(54) **LICHTLEITFASEREINHEIT, LASERSYSTEM MIT EINER SOLCHEN LICHTLEITFASEREINHEIT SOWIE VERFAHREN ZUM BEURTEILEN EINER EINKOPPELGÜTE DER EINKOPPLUNG VON NUTZLICHT IN EINE SOLCHE LICHTLEITFASEREINHEIT**
OPTICAL FIBER UNIT, LASER SYSTEM WITH SUCH AN OPTICAL FIBER UNIT, AND METHOD FOR EVALUATING THE COUPLING QUALITY WHEN COUPLING USEFUL LIGHT INTO SUCH AN OPTICAL FIBER UNIT
UNITÉ DE FIBRE OPTIQUE, SYSTÈME LASER COMPRENANT UNE TELLE UNITÉ DE FIBRE OPTIQUE, ET PROCÉDÉ POUR ÉVALUER LA QUALITÉ D'INJECTION LORS DE L'INJECTION DE LUMIÈRE UTILE DANS UNE UNITÉ DE FIBRE OPTIQUE DE CE TYPE

(30) Priorität: 09.10.2020 DE 102020212817
(43) Veröffentlichungstag der Anmeldung: 16.08.2023
(73) Patentinhaber: TRUMPF Laser SE, 78713 Schramberg (DE)
(72) Erfinder: KILLI, Alexander, 78647 Trossingen (DE); BUDNICKI, Aleksander, 79194 Gundelfingen (DE); BAUMBACH, Stefan, 77709 Oberwolfach (DE)
(74) Vertreter: Trumpf Patentabteilung
(86) Internationale Anmeldenummer: PCT/EP2021/075652
(87) Internationale Veröffentlichungsnummer: WO 2022/073747

(56) Entgegenhaltungen:
- DE-A1- 102018 114 368
- US-A1- 2011 305 249
- US-A1- 2020 249 120
- US-B1- 10 630 043

## Beschreibung

Die Erfindung betrifft eine Lichtleitfasereinheit, ein Lasersystem mit einer solchen Lichtleitfasereinheit, sowie ein Verfahren zum Beurteilen einer Einkoppelgüte der Einkopplung von Nutzlicht in eine solche Lichtleitfasereinheit. US 2011/305249 A1 offenbart eine Lichtleitfasereinheit gemäß dem Stand der Technik.

Eine Lichtleitfasereinheit der hier angesprochenen Art weist eine Lichtleitfaser auf, die einen zum Führen von Nutzlicht durch die Lichtleitfaser eingerichteten Lichtleitbereich und an einem als Einkoppelende bezeichneten Faserende eine erste Faserendfläche zur Einkopplung von Laserlicht in den Lichtleitbereich aufweist. An einem als Auskoppelende bezeichneten Faserende weist die Lichtleitfasereinheit eine zweite Faserendfläche zur Auskopplung von Laserlicht aus dem Lichtleitbereich auf. An einem ersten Faserende, ausgewählt aus dem Einkoppelende und dem Auskoppelende, ist ein erstes Endstück derart angeordnet, dass Laserlicht durch das erste Endstück hindurch in den Lichtleitbereich eingekoppelt oder aus dem Lichtleitbereich ausgekoppelt werden kann.

Bei einer solchen Lichtleitfasereinheit besteht grundsätzlich das Erfordernis, Laserlicht mit möglichst hoher Strahlqualität und möglichst geringen Verlusten über das Einkoppelende in die Lichtleitfasereinheit einzukoppeln. Dabei erweist es sich als schwierig, eine Einkoppelgüte der Einkopplung geeignet zu bewerten und insbesondere zu überwachen. Es ist vorgeschlagen worden, die Einkoppelgüte zu überwachen, indem seitlich aus der Lichtleitfasereinheit austretendes Leckagelicht erfasst wird. Hierbei bildet sich jedoch typischerweise ein Leistungsplateau aus, sodass auch bei schlechter Strahlqualität noch eine hohe Leistung am Detektor gemessen wird. Dies verhindert eine optimale Justage der Einkopplung. Es ist auch vorgeschlagen worden, bei Lichtleitfasereinheiten, die einen Fasermantel aufweisen, im Fasermantel propagierendes Mantellicht zu erfassen. Auch dies erlaubt jedoch keine optimale Beurteilung der Einkoppelgüte und kommt darüber hinaus nur infrage, wenn das in die Lichtleitfasereinheit eingekoppelte Laserlicht höhere Moden aufweist, die im Fasermantel propagieren.

Der Erfindung liegt die Aufgabe zugrunde, eine Lichtleitfasereinheit, ein Lasersystem mit einer solchen Lichtleitfasereinheit und ein Verfahren zum Beurteilen einer Einkoppelgüte der Einkopplung von Nutzlicht in eine Lichtleitfasereinheit zu schaffen, wobei die genannten Nachteile zumindest reduziert, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Lichtleitfasereinheit derart weitergebildet wird, dass das erste Endstück ein Reflexelement aufweist, das eingerichtet ist, um einen Teil von durch den Lichtleitbereich entlang einer Propagationsrichtung propagierendem Nutzlicht von der Propagationsrichtung abzulenken. Auf diese Weise ist eine stabile und reproduzierbare Beurteilung der Einkoppelgüte möglich, sodass insbesondere eine geregelte Leistung sowie eine gleichbleibende Strahlqualität für das Nutzlicht gewährleistet werden können. Insbesondere die Ausbildung eines Leistungsplateaus wird vermieden, sodass eine entsprechende Messung gerade auch auf die Strahlqualität empfindlich ist.

Unter einer Faserendfläche wird hier insbesondere eine gedachte oder physikalische Fläche verstanden, welche die Lichtleitfaser in Richtung ihrer längsten Erstreckung, d.h. ihrer Längsrichtung, die insbesondere mit der Propagationsrichtung des in der Lichtleitfaser propagierenden Nutzlichts zusammenfällt, begrenzt. Die Faserendfläche kann auch eine Teilfläche einer aus einer Mehrzahl von Endflächen zusammengesetzten Endflächenanordnung sein. In bevorzugter Ausgestaltung ist die Faserendfläche eine Faserendfacette.

Die Propagationsrichtung ist insbesondere eine Richtung, entlang der sich das Laserlicht ausgehend von einer Laserstrahlungsquelle ausbreitet. Die Angabe "in Propagationsrichtung vor" einem Element bezeichnet einen Ort, der durch Photonen des Nutzlichts, die sich in Propagationsrichtung ausbreiten, zeitlich vor dem Element passiert wird, auf das sich die Angabe bezieht. Entsprechend bezeichnet die Angabe "in Propagationsrichtung hinter" einem Element einen Ort, der von sich in Propagationsrichtung ausbreitenden Photonen zeitlich nach dem in Bezug genommenen Element passiert wird.

Das Endstück ist insbesondere mit dem zugeordneten Faserende verbunden, insbesondere an dem Faserende befestigt, vorzugsweise durch Schweißen oder Kleben.

Unter Nutzlicht wird hier insbesondere Licht verstanden, welches bestimmungsgemäß auf einem vorbestimmten Strahlpfad propagiert, der von einer Laserstrahlungsquelle durch den Lichtleitbereich bis zu einem Licht-Zielort führt. Der Licht-Zielort ist dabei insbesondere ein Ort, an dem das Nutzlicht bestimmungsgemäß angewendet wird, beispielsweise auf oder an einem Werkstück, welches mit Laserlicht bestrahlt, beispielsweise geschweißt oder geschnitten wird. Insbesondere ist Nutzlicht solches Licht, welches bestimmungsgemäß entlang der Propagationsrichtung durch den Lichtleitbereich propagiert. Insbesondere ist Nutzlicht die Summe aller Photonen oder Lichtstrahlen, die bei ungestörter Ausbreitung den Lichtleitbereich passieren würden, unabhängig davon, ob sie - in Propagationsrichtung - noch vor dem Lichtleitbereich, in dem Lichtleitbereich oder hinter dem Lichtleitbereich angeordnet sind und/oder abgezweigt werden. Für die Qualifizierung von Licht als einem Teil des Nutzlichts ist es demnach irrelevant, ob das Licht den Lichtleitbereich tatsächlich bereits passiert hat; vielmehr ist es ausreichend, dass das Licht den Lichtleitbereich bestimmungsgemäß passieren würde, wenn es nicht beispielsweise durch das Reflexelement abgelenkt würde. Insbesondere kann ein Teil des Nutzlichts in Propagationsrichtung vor dem Lichtleitbereich oder auch hinter dem Lichtleitbereich abgelenkt werden. Insbesondere ist Nutzlicht solches Licht, das bei einer Verwendung der Lichtleitfasereinheit in einer Laserbearbeitungsmaschine insbesondere ausgehend von der Laserstrahlungsquelle der Laserbearbeitungsmaschine entlang des Strahlpfads propagiert, der durch den Lichtleitbereich zu einem Werkstück als Licht-Zielort führt. Insbesondere ist das Nutzlicht kein Mantellicht und kein Leckagelicht.

Gemäß einer Weiterbildung der Erfindung ist vorgesehen, dass die Lichtleitfaser einen Mantelbereich aufweist, der den Lichtleitbereich in Umfangsrichtung umgreift. Der Lichtleitbereich ist insbesondere ein Fasermantel oder Teil eines Fasermantels. Ein solcher Mantelbereich kann vorteilhaft die Effizienz der Lichtleitung innerhalb der Lichtleitfaser erhöhen. Insbesondere abhängig von den Moden des in die Lichtleitfaser eingekoppelten Laserlichts ist es möglich, dass Mantellicht in dem Mantelbereich auftritt. Wichtig ist, dass unabhängig davon, ob in dem Mantelbereich Mantellicht auftritt, gemäß der hier vorgeschlagenen Lehre nicht das Mantellicht zur Beurteilung der Einkoppelgüte herangezogen wird, sondern vielmehr ein Teil des durch den Lichtleitbereich propagierenden Nutzlichts.

Gemäß einer Weiterbildung der Erfindung ist vorgesehen, dass an einem zweiten Faserende, das ausgewählt ist aus dem Auskoppelende und dem Einkoppelende, ein zweites Endstück derart angeordnet ist, dass Laserlicht durch das zweite Endstück hindurch in den Lichtleitbereich eingekoppelt oder aus dem Lichtleitbereich ausgekoppelt werden kann. Das zweite Faserende ist dabei von dem ersten Faserende verschieden. Ist also beispielsweise das erste Faserende das Auskoppelende, so ist das zweite Faserende das Einkoppelende, und umgekehrt. Gemäß der hier vorgeschlagenen Weiterbildung weist somit die Lichtleitfaser vorteilhaft an beiden Faserenden jeweils ein Endstück auf. Je nach Ausgestaltung des Endstücks ist dadurch die Verwendbarkeit der Lichtleitfaser mit Blick auf die Einkopplung und Auskopplung von Laserlicht und/oder die mechanische Verbindung der Lichtleitfaser mit weiteren Elementen verbessert.

Gemäß einer Weiterbildung der Erfindung ist vorgesehen, dass das erste Endstück an dem Auskoppelende angeordnet ist. Das Reflexelement ist eingerichtet, um einen Reflex des Nutzlichts entgegen der Propagationsrichtung zurück in den Lichtleitbereich einzukoppeln. Es wird somit am Faserausgang der Lichtleitfaser ein Reflex erzeugt, der erneut in die Lichtleitfaser eingekoppelt wird, in dieser entgegen der Propagationsrichtung zurückläuft und schließlich als Rückreflex räumlich in Propagationsrichtung vor der Fasereinkopplung gemessen werden kann. Dieser Rückreflex kann dann vorteilhaft genutzt werden, um die Einkopplung auf Leistung zu justieren. Dabei bildet sich vorteilhaft bei der Leistungsmessung des rückgekoppelten Lichts kein Leistungsplateau aus. Somit kann die Einkoppelgüte reproduzierbar und mit sehr hoher Genauigkeit bestimmt werden. Die Messung ist insbesondere auch empfindlich auf eine verschlechterte Strahlqualität.

Diese Erfassung des Rückreflexes ermöglicht vorteilhaft insbesondere mit einem rein passiven Kollimationsmodul die Verwirklichung eines Justagemodus zur Optimierung des Einkoppelzustands, eine Modenüberwachung des erwarteten ausgekoppelten Lasermodes indirekt über den Rückreflex, und eine Laserleistungsregelung per Messung des Rückreflexes.

Alternativ ist bevorzugt vorgesehen, dass das erste Endstück an dem Einkoppelende angeordnet ist, wobei das Reflexelement eingerichtet ist, um einen Reflex des Nutzlichts von einer Strahlachse des Nutzlichts in einem ersten bestimmten Winkel abzuklenken. In diesem Fall wird demnach der Reflex am Fasereingang erzeugt, der Reflex somit insbesondere nicht in den Lichtleitbereich eingekoppelt. Diese Ausgestaltung ist daher weniger anfällig in Hinblick auf eine hochgenaue Positionierung des Reflexelements, dafür aber auch weniger empfindlich in Bezug auf die Erfassung der Einkoppelgüte. Gleichwohl kann die Einkoppelgüte auch mit dieser Ausgestaltung reproduzierbar mit hoher Genauigkeit erfasst werden, wobei auch die Ausbildung eines Leistungsplateaus vermieden wird.

Gemäß einer weiteren bevorzugten Ausgestaltung ist vorgesehen, dass das erste Endstück an dem Auskoppelende angeordnet ist, wobei das - erste - Reflexelement eingerichtet ist, um einen Reflex des Nutzlichts entgegen der Propagationsrichtung zurück in den Lichtleitbereich einzukoppeln. Das zweite Endstück ist an dem Einkoppelende angeordnet und weist ein weiteres, zweites Reflexelement auf, wobei das weitere Reflexelement eingerichtet ist, um einen Reflex des Nutzlichts von einer Strahlachse des Nutzlichts in einem ersten bestimmten Winkel abzulenken. Diese Ausgestaltung kombiniert die beiden zuvor beschriebenen Ausgestaltungen und ermöglicht somit vorteilhaft eine besonders umfassende und genaue Beurteilung der Einkoppelgüte. Ist zusätzlich noch ein Messreflexelement vorgesehen, oder wirkt das zweite Reflexelement als ein Messreflexelement, wobei das Messreflexelement eingerichtet ist, um durch den Lichtleitbereich zurückgeführtes Licht in einem zweiten bestimmten Winkel von dem Strahlpfad des Nutzlichts wegzuleiten, insbesondere in Richtung einer Messeinrichtung, kann vorteilhaft zusätzlich noch eine Prozessüberwachung - wie im folgenden beschrieben - verwirklicht werden. Das durch den Lichtleitbereich zurückgeführte und durch das Messreflexelement weggeleitete Licht ist in bevorzugter Ausgestaltung Prozesslicht, das eine Beurteilung des mit dem Nutzlicht durchgeführten Arbeitsprozesses erlaubt; es kann sich bei dem zurückgeführten Licht aber - alternativ oder zusätzlich - auch um den Reflex des ersten Reflexelements handeln, sodass dann vorteilhaft dessen Wegleitung auf ein Messinstrument in die Lichtleitfasereinheit integriert ist. Unter "Wegleiten" wird insbesondere - besonders bei einem teiltransparenten Umlenkelement oder Messreflexelement und abhängig von dem ungestörten Strahlpfad des Nutzlichts - "Durchlassen" oder "Ablenken" verstanden.

Gemäß einer Weiterbildung der Erfindung ist vorgesehen, dass das erste Endstück an dem Auskoppelende angeordnet ist, wobei das Reflexelement eingerichtet ist, um einen Reflex des Nutzlichts entgegen der Propagationsrichtung zurück in den Lichtleitbereich einzukoppeln. Das zweite Endstück ist an dem Einkoppelende angeordnet und weist ein Messreflexelement auf, das eingerichtet ist, um den durch den Lichtleitbereich zurückgeführten Reflex des Nutzlichts von einer Strahlachse des Nutzlichts in einem zweiten bestimmten Winkel, insbesondere in Richtung einer Messeinrichtung, abzulenken. Um den durch den Lichtleitbereich zurückgeführten Reflex des Nutzlichts zur Beurteilung der Einkoppelgüte erfassen zu können, muss dieser auf eine Messeinrichtung gelenkt werden. Bei der hier beschriebenen Ausgestaltung ist diese Ablenkung vorteilhaft in Form des Messreflexelements in die Lichtleitfasereinheit selbst integriert, sodass es keines weiteren, zusätzlichen optischen Aufbaus, beispielsweise eines Spiegels oder dergleichen, bedarf. Weiterhin kann dieses Messreflexelement vorteilhaft im Auslieferungszustand der Lichtleitfasereinheit fix und stabil justiert sein, sodass die Lichtleitfasereinheit besonders einfach zur Beurteilung der Einkoppelgüte genutzt werden kann, ohne dass zusätzlicher Justageaufwand anfällt.

Das Messreflexelement kann aber - alternativ oder zusätzlich - vorteilhaft auch genutzt werden, um eine Prozessüberwachung des mit dem Nutzlicht durchgeführten Arbeitsprozesses zu verwirklichen. Dabei kann insbesondere ein Verhältnis aus eingestrahlter Lichtleistung zu zurückkommender Lichtleistung als Maß für die Rückwirkung vom Prozess dienen. Das Messreflexelement ist dann vorteilhaft eingerichtet, um durch den Lichtleitbereich zurückgeführtes Prozesslicht insbesondere in Richtung einer Messeinrichtung wegzuleiten.

Gemäß einer Weiterbildung der Erfindung ist vorgesehen, dass das erste Endstück ein optisches Strahlformungselement zur Strahlformung des Nutzlichts aufweist, wobei das Reflexelement zusätzlich zu dem optischen Strahlformungselement an dem ersten Endstück angeordnet ist. Ein solches Strahlformungselement kann beispielsweise eine Linse, insbesondere Kollimationslinse oder Zerstreuungslinse, ein diffraktives optisches Element, eine Wellenplatte, ein Axicon, oder ein Keil sein. Bei der hier vorgeschlagenen Ausgestaltung wird also nicht ein Rückreflex des Strahlformungselements genutzt, sondern vielmehr ein separates Reflexelement bereitgestellt, das insbesondere eigens zur Erzeugung des Rückreflexes vorgesehen ist. Ein Strahlformungselement weist typischerweise eine Antireflexbeschichtung hoher Güte auf. Demgegenüber weist das Reflexelement vorzugsweise zumindest an einer Fläche eine Antireflexbeschichtung reduzierter Güter auf, um einen größeren Anteil des Nutzlichts zurückreflektieren zu können als das Strahlformungselement.

Gemäß einer Weiterbildung der Erfindung ist vorgesehen, dass das Reflexelement unlösbar an dem ersten Endstück befestigt ist. Somit kann eine stabile Konstruktion zur reproduzierbaren Beurteilung der Einkoppelgüte gewährleistet werden. Insbesondere ist das Reflexelement bevorzugt monolithisch, insbesondere temperaturstabil mit dem ersten Endstück verbunden. Insbesondere ist das Reflexelement dejustagestabil, d.h. insbesondere stabil gegen Dejustage, mit dem ersten Endstück verbunden. Was hier über das Reflexelement und das erste Endstück ausgeführt ist, gilt bevorzugt entsprechend auch für das zweite Endstück und das weitere, zweite Reflexelement. Die unlösbare Befestigung ist bevorzugt bewirkt durch Schweißen oder Kleben, insbesondere Laserschweißen, insbesondere Ultrakurzpuls-Glasschweißen. Vorzugsweise ist die unlösbare Verbindung wasser- und/oder gasdicht.

In bevorzugter Ausgestaltung ist das Reflexelement vermittelt über ein Befestigungsrohr an dem Endstück befestigt. Insbesondere ist es möglich, dass das Reflexelement über eine Kugel-Konus-Verbindung mit dem Befestigungsrohr verbunden ist. Dabei weist bevorzugt das Befestigungsrohr eine konische Innenfläche auf, wobei das Reflexelement eine kugelsegmentförmige Außenfläche aufweist, mit der es an der kegelförmigen Innenfläche des Befestigungsrohrs anliegt. Auf diese Weise kann das Reflexelement relativ zu dem Befestigungsrohr vor dem Fixieren ausgerichtet, insbesondere justiert werden. Das Befestigungsrohr ist vorzugsweise ein Glasrohr.

Gemäß einer Weiterbildung der Erfindung ist vorgesehen, dass das Reflexelement als ein Element ausgebildet ist, das ausgewählt ist aus einer Gruppe, bestehend aus: Einer plan-parallelen Platte, einem Fenster, und einem Strahlformungselement. Das Strahlformungselement ist bevorzugt insbesondere eine Linse, insbesondere eine Kollimationslinse oder Auskoppellinse oder Zerstreuungslinse, ein diffraktives optisches Element, eine Wellenplatte, ein Axicon, oder ein Keil. Ist das Reflexelement eine plan-parallele Platte oder ein Fenster, ist es vorzugsweise zusätzlich zu einem Strahlformungselement vorgesehen. Ist das Reflexelement ein Strahlformungselement, kann in vorteilhafter Ausgestaltung die Funktion der Erzeugung des Rückreflexes durch das insbesondere ohnehin vorgesehene Strahlformungselement mit übernommen werden. Die Lichtleitfasereinheit kann so besonders kompakt ausgebildet sein.

Gemäß einer Weiterbildung der Erfindung ist vorgesehen, dass die Lichtleitfaser als photonische Kristallfaser mit hohlem Kern (Hollow Core Photonic Crystal Fiber - HC-PCF) ausgebildet ist. Alternativ ist die Lichtleitfaser bevorzugt als photonische Bandlücken-Faser (Band Gap-Faser) ausgebildet. Alternativ ist die Lichtleitfaser bevorzugt als Antiresonante Faser (Antiresonant Coupling Fiber) ausgebildet. Insbesondere ist die Lichtleitfaser bevorzugt als Tubularfaser ausgebildet. Alternativ ist die Lichtleitfaser bevorzugt als gehemmte Kopplungsfaser (Inhibited Coupling Fiber) ausgebildet, insbesondere als Kagoméfaser. Solche Fasern eignen sich insbesondere zur Führung ultrakurzer Pulse, mithin für Ultrakurzpulsanwendungen wie beispielsweise Ultrakurzpulsschweißen. Vorzugsweise ist zugleich das Reflexelement unlösbar, insbesondere monolithisch, insbesondere temperaturstabil, an dem Endstück befestigt.

Besonders bevorzugt wird eine Ausgestaltung der Lichtleitfasereinheit, bei der die Lichtleitfaser als Hohlkernfaser ausgebildet ist, wobei zugleich das Reflexelement unlösbar, insbesondere monolithisch, insbesondere temperaturstabil, an dem Endstück befestigt ist.

Gemäß einer Weiterbildung der Erfindung ist vorgesehen, dass das wenigstens eine Endstück, ausgewählt aus dem ersten Endstück und dem zweiten Endstück, als Endkappe ausgebildet ist. In bevorzugter Ausgestaltung ist das Endstück als hohle Endkappe ausgebildet. Diese Ausgestaltung ist besonders vorteilhaft in Kombination mit einer als Hohlkernfaser ausgebildeten Lichtleitfaser oder einer anderen für Ultrakurzpulsanwendungen geeigneten Lichtleitfaser, da die hohle Endkappe dann ohne Gefahr einer Beeinträchtigung oder gar Zerstörung für die Einkopplung der sehr hohen Laserintensitäten in den Lichtleitbereich genutzt werden kann. Eine solche Endkappe ist vorzugsweise ein Glaselement, im Fall einer hohlen Endkappe ein hohles Glaselement, insbesondere ein Glasrohr, vorzugsweise mit stirnseitiger Abschlussplatte aus Glas, das bevorzugt mit der ebenfalls Glas aufweisenden oder aus Glas bestehenden Lichtleitfaser verbunden, insbesondere stoffschlüssig verbunden, vorzugsweise verschweißt oder verklebt, besonders bevorzugt ultrakurzpuls-glasverschweißt ist. Die Endkappe kann insbesondere als Ferrule ausgebildet sein Es ist in bevorzugter Ausgestaltung auch möglich, dass das Endstück als Endkappe mit Ergänzungsstück ausgebildet ist. Dabei ist auf die eigentliche Endkappe noch ein Ergänzungsstück aufgebracht oder an die Endkappe angebracht, wobei das Ergänzungsstück das Reflexelement aufweist oder trägt. Das Ergänzungsstück kann insbesondere ein Rohr, insbesondere Glasrohr, sein. In bevorzugter Ausgestaltung ist das Ergänzungsstück mit der Endkappe stoffschlüssig verbunden, insbesondere durch Schweißen oder Kleben, besonders bevorzugt Ultrakurzpuls-Glasschweißen.

Alternativ ist es bevorzugt möglich, dass das Endstück als Stecker, insbesondere LWL-Stecker oder LWL-Steckverbinder, oder LLK-Stecker oder LLK-Steckverbinder, ausgebildet ist. Dies stellt eine ganz besonders kompakte Ausgestaltung der Lichtleitfasereinheit dar.

Gemäß der Erfindung ist vorgesehen, dass das Reflexelement an einer bezüglich der Propagationsrichtung des Nutzlichts vorderen Stirnfläche mit einer ersten Antireflexbeschichtung versehen ist, die einen ersten Reflexionsgrad aufweist. Das Reflexelement ist an einer bezüglich der Propagationsrichtung des Nutzlichts rückwärtigen Stirnfläche mit einer zweiten Antireflexbeschichtung versehen, die einen zweiten Reflexionsgrad aufweist. Der erste Reflexionsgrad ist größer als der zweite Reflexionsgrad. Somit kann vorteilhaft einerseits ein für die Kontrolle der Einkopplung hinreichend intensiver Rückreflex erzeugt werden, zugleich andererseits aber vermieden werden, dass das Reflexelement insgesamt eine unnötig geringe Transmission aufweist und damit das Nutzlicht nachteilig schwächt. Es wird also in vorteilhafter Ausgestaltung insbesondere eine Abwägung zwischen der Erzeugung eines aussagekräftigen Rückreflexes einerseits und einer möglichst ungeschwächten Transmission des Nutzlichts andererseits erzielt. Gemäß einer bevorzugten Ausgestaltung ist der Reflexionsgrad an der vorderen Stirnfläche insbesondere im Vergleich zu typischerweise verwendeten Antireflexbeschichtungen erhöht, um einen definierten, für eine aussagekräftige Messung der Einkoppelgüte verwendbaren Rückreflex zu erzeugen. An der rückwärtigen Stirnfläche weist das Reflexelement bevorzugt demgegenüber einen für Antireflexbeschichtungen üblichen Reflexionsgrad auf, sodass vorteilhaft Leistungsverluste minimiert, insbesondere unnötige Leistungsverluste vermieden werden. Erfindungsgemäß beträgt der erste Reflexionsgrad von mindestens 0,3 % bis höchstens 2 %, und in Ausgestaltungen, die nicht unter die Ansprüche fallen, beträgt er von mindestens 0,1 % bis höchstens 1 %, vorzugsweise von mindestens 0,5 % bis höchstens 1 %, vorzugsweise von mindestens 0,1 % bis höchstens 0,5 %. Der zweite Reflexionsgrad beträgt erfindungsgemäß höchstens 0,2 %, vorzugsweise höchstens 0,1 %.

Die Aufgabe wird auch gelöst, indem ein Lasersystem geschaffen wird, welches eine Laserstrahlungsquelle aufweist, die eingerichtet ist zur Emission von Nutzlicht. Das Lasersystem weist außerdem eine erfindungsgemäße Lichtleitfasereinheit oder eine Lichtleitfasereinheit nach einem der zuvor beschriebenen Ausführungsbeispiele auf. Weiter weist das Lasersystem eine Koppeleinrichtung auf, die eingerichtet ist, um das Nutzlicht in die Lichtleitfasereinheit einzukoppeln. Weiter weist das Lasersystem eine Messeinrichtung auf, die eingerichtet ist, um den von dem Reflexelement abgelenkten Teil des Nutzlichts zu erfassen. In Zusammenhang mit dem Lasersystem verwirklichen sich insbesondere die Vorteile, die bereits in Zusammenhang mit der Lichtleitfasereinheit erläutert wurden. Insbesondere ist es mittels der Messeinrichtung, die den von dem Reflexelement abgelenkten Teil des Nutzlichts erfasst, in reproduzierbarer und stabiler Weise möglich, die Einkoppelgüte insbesondere auch unter Berücksichtigung der Strahlqualität zu erfassen, insbesondere ohne dass sich ein Leistungsplateau ausbildet. Entsprechend ist in bevorzugter Ausgestaltung die Messeinrichtung eingerichtet, um die Einkoppelgüte der Einkopplung des Nutzlichts in die Lichtleitfasereinheit anhand des erfassten Teils des Nutzlichts zu beurteilen. Dabei verwirklichen sich in besonderer Weise die bereits beschriebenen Vorteile.

Die Messeinrichtung weist bevorzugt eine Lichtmesseinrichtung auf, die eingerichtet ist, um eine Lichtleistung und/oder ein Modenprofil des erfassten Teils des Nutzlichts, und/oder eine Winkelabweichung von einem vorbestimmten Winkel, den ein Strahlpfad des erfassten Teils des Nutzlichts bestimmungsgemäß mit der Propagationsrichtung einschließen soll, zu erfassen.

Insbesondere dann, wenn das Reflexelement an dem Auskoppelende angeordnet ist, sodass der Reflex des Nutzlichts entgegen der Propagationsrichtung zurück in den Lichtleitbereich eingekoppelt und anschließend vor dem Fasereingang durch die Lichtmesseinrichtung erfasst wird, ist die Lichtmesseinrichtung bevorzugt eingerichtet, um die Lichtleistung und/oder das Modenprofil des Reflexes zu erfassen. Auf diese Weise können insbesondere ein Justagemodus zur Optimierung des Einkoppelzustands, eine Modenüberwachung und/oder eine Laserleistungsregelung verwirklicht werden. Das Reflexelement ist bevorzugt so an dem Auskoppelende angeordnet, insbesondere bevorzugt fix und stabil, insbesondere monolithisch befestigt, dass der Reflex exakt in den Lichtleitbereich eingekoppelt wird, sodass er durch die Lichtleitfaser wieder zurück zu dem Einkoppelende transportiert wird. Mithilfe der Messung des Reflexes kann dann insbesondere die Einkopplung justiert, vorzugsweise optimiert werden.

Insbesondere dann, wenn das Reflexelement an dem Einkoppelende angeordnet ist und somit der Reflex vor der Lichtleitfaser erzeugt wird und nicht durch die Lichtleitfaser zurückläuft, ist die Lichtmesseinrichtung bevorzugt eingerichtet, um eine Winkelabweichung von einem vorbestimmten Winkel zu erfassen, wobei ein Strahlpfad des erfassten Teils des Nutzlichts den vorbestimmten Winkel bestimmungsgemäß mit der Propagationsrichtung einschließen soll. Dabei wird davon ausgegangen, dass bei korrekter Justage der Einkopplung und fixer, stabiler, insbesondere monolithischer Anordnung des Reflexelements an dem Einkoppelende ein Reflex mit wohldefiniertem Winkel seiner Ausbreitungsrichtung, das heißt des Srahlpfads, zu der Propagationsrichtung erzeugt wird. Ist dann die Einkopplung dejustiert, ergibt sich eine Winkelabweichung von diesem vorbestimmten, wohldefinierten Winkel, sodass anhand der Erfassung dieser Winkelabweichung die Einkoppelgüte beurteilt werden kann.

Die Lichtmesseinrichtung ist vorzugsweise als Kamera ausgebildet. Dies erlaubt eine genaue Messung der Lage des Reflexes in der Bildebene der Kamera.

Alternativ ist die Lichtmesseinrichtung bevorzugt als Photodiode, vorzugsweise mit vorgeschalteter Blende, oder als Quadrantendiode ausgebildet. Auf diese Weise lässt sich - gegebenenfalls insbesondere kostengünstiger als mit einer Kamera - sehr genau die Lage des Reflexes und damit die Einkoppelgüte beurteilen.

Ist das Reflexelement an dem Auskoppelende angeordnet und weist die Lichtleitfasereinheit nicht selbst ein Messreflexelement oder weiteres Reflexelement zur Auskopplung des zurückreflektieren Reflexes auf, weist vorzugsweise die Messeinrichtung einen separaten Messspiegel, teiltransparenten Spiegel oder ein anderes geeignetes optisches Umlenkelement auf, um den Reflex auf die Lichtmesseinrichtung zu leiten.

Es ist auch möglich, dass anstelle des Messreflexelements ein zusätzliches optisches Umlenkelement, insbesondere ein Strahlteiler, verwendet wird, um den weiteren Teil des in Propagationsrichtung einfallenden Nutzlichts einkoppelseitig in Richtung der Lichtmesseinrichtung wegzuleiten, oder ein Justierspiegel ist hierzu teiltransparent ausgebildet.

Der teiltransparente Justierspiegel kann zusätzlich oder alternativ auch verwendet werden, um den von dem Reflexelement kommenden Reflex zu der Lichtmesseinrichtung durchzulassen.

Gemäß einer Weiterbildung der Erfindung ist vorgesehen, dass die Messeinrichtung eine Steuereinrichtung aufweist, wobei die Koppeleinrichtung eine ansteuerbare Justiereinrichtung aufweist, die eingerichtet ist, um die Einkopplung des Nutzlichts in die Lichtleitfasereinheit zu justieren. Die Steuereinrichtung ist mit der Justiereinrichtung wirkverbunden und eingerichtet, um die Justiereinrichtung in Abhängigkeit von dem erfassten Teil des Nutzlichts anzusteuern. Auf diese Weise ist vorteilhaft insbesondere eine automatische oder automatisierte, vorzugsweise auch permanente, insbesondere in Echtzeit ablaufende Justierung der Einkopplung und damit insbesondere Nachregelung der Einkoppelgüte möglich. Die Justiereinrichtung weist in bevorzugter Ausgestaltung zwei motorisierte Spiegelhalter auf, die mittels der Steuereinrichtung so angesteuert werden können, dass die Einkopplung des Nutzlichts in die Lichtleitfasereinheit optimiert wird. Alternativ oder zusätzlich ist bevorzugt möglich, dass die Justiereinrichtung eine justierbare, d.h. insbesondere verstellbare, Einkoppellinse aufweist.

Gemäß einer Weiterbildung der Erfindung ist vorgesehen, dass die Messeinrichtung zusätzlich eingerichtet ist, um einen weiteren, vor dem Einkoppeln in die Lichtleitfasereinheit von dem Strahlpfad des Nutzlichts weggeleiteten Teil des Nutzlichts zu erfassen. Die Messeinrichtung ist weiter eingerichtet, um einen unter Verwendung des Nutzlichts mit dem Lasersystem durchgeführten Bearbeitungsprozess anhand des erfassten Teils des Nutzlichts oder Prozesslichts und des erfassten weiteren Teils des Nutzlichts zu beurteilen. Insbesondere auf diese Weise kann eine Prozessüberwachung durchgeführt werden, wobei bevorzugt ein Verhältnis aus eingestrahlter Leistung zu zurückkommender Leistung als Maß für eine Rückwirkung vom Prozess betrachtet wird. Des Weiteren kann bevorzugt eine Schnellabschaltung durchgeführt werden, wenn zurückkommendes Licht erwartet wird, aber keines detektiert werden kann. Insbesondere kann auf diese Weise eine optische Faserbruchüberwachung verwirklicht werden. Die hier beschriebene Prozessüberwachung erweist sich als besonders vorteilhaft in Kombination mit einem monolithisch, insbesondere temperaturstabil befestigten Reflexelement, da so die Prozessüberwachung besonders stabil und reproduzierbar durchgeführt werden kann.

Die Aufgabe wird schließlich auch gelöst, indem ein Verfahren zum Beurteilen einer Einkoppelgüte der Einkopplung von Nutzlicht einer Laserstrahlungsquelle in eine Lichtleitfasereinheit geschaffen wird, wobei im Rahmen des Verfahrens ein erfindungsgemäßes Lasersystem oder eine Lasersystem nach einem der zuvor beschriebenen Ausführungsbeispiele verwendet wird. In Zusammenhang mit dem Verfahren verwirklichen sich dabei insbesondere die bereits zuvor in Zusammenhang mit dem Lasersystem beschriebenen Vorteile.

Im Rahmen des Verfahrens wird insbesondere ein von dem Reflexelement der Lichtleitfasereinheit abgelenkter Teil des Nutzlichts erfasst, wobei die Einkoppelgüte anhand des erfassten Teils des Nutzlichts beurteilt wird.

Bevorzugt wird die Emission des Nutzlichts unterbunden, wenn eine Intensität des erfassten Teils des Nutzlichts unter einen vorbestimmten Schwellenwert abfällt.

Vorzugsweise wird dabei eine Lichtleistung und/oder ein Modenprofil des erfassten Teils des Nutzlichts erfasst, und/oder es wird eine Winkelabweichung von einem vorbestimmten Winkel, den ein Strahlpfad des erfassten Teils des Nutzlichts bestimmungsgemäß mit der Propagationsrichtung einschließen soll, erfasst.

Bevorzugt wird die Einkopplung des Nutzlichts in die Lichtleitfasereinheit automatisch auf der Grundlage des erfassten Teils des Nutzlichts justiert.

Bevorzugt wird ein weiterer, vor dem Einkoppeln in die Lichtleitfasereinheit von dem Strahlpfad des Nutzlichts weggeleiteter Teil des Nutzlichts erfasst. Dabei wird vorzugsweise ein unter Verwendung des Nutzlichts mit dem Lasersystem durchgeführter Bearbeitungsprozess anhand des erfassten Teils des Nutzlichts oder Prozesslichts und anhand des erfassten weiteren Teils des Nutzlichts beurteilt.

Die Erfindung wird im Folgenden anhand der Zeichnung näher erläutert. Dabei zeigen:
- Figur 1: eine schematische Darstellung eines ersten Ausführungsbeispiels eines Lasersystems mit einem ersten Ausführungsbeispiel einer Lichtleitfasereinheit;
- Figur 2: eine schematische Darstellung eines zweiten Ausführungsbeispiels eines Lasersystems mit einem zweiten Ausführungsbeispiel einer Lichtleitfasereinheit;
- Figur 3: eine schematische Darstellung eines dritten Ausführungsbeispiels eines Lasersystems mit einem dritten Ausführungsbeispiel einer Lichtleitfasereinheit;
- Figur 4: eine schematische Darstellung eines vierten Ausführungsbeispiels eines Lasersystems, hier beispielhaft mit dem ersten Ausführungsbeispiel der Lichtleitfasereinheit, und
- Figur 5: eine schematische Darstellung eines fünften Ausführungsbeispiel eines Lasersystems mit einem vierten Ausführungsbeispiel einer Lichtleitfasereinheit.

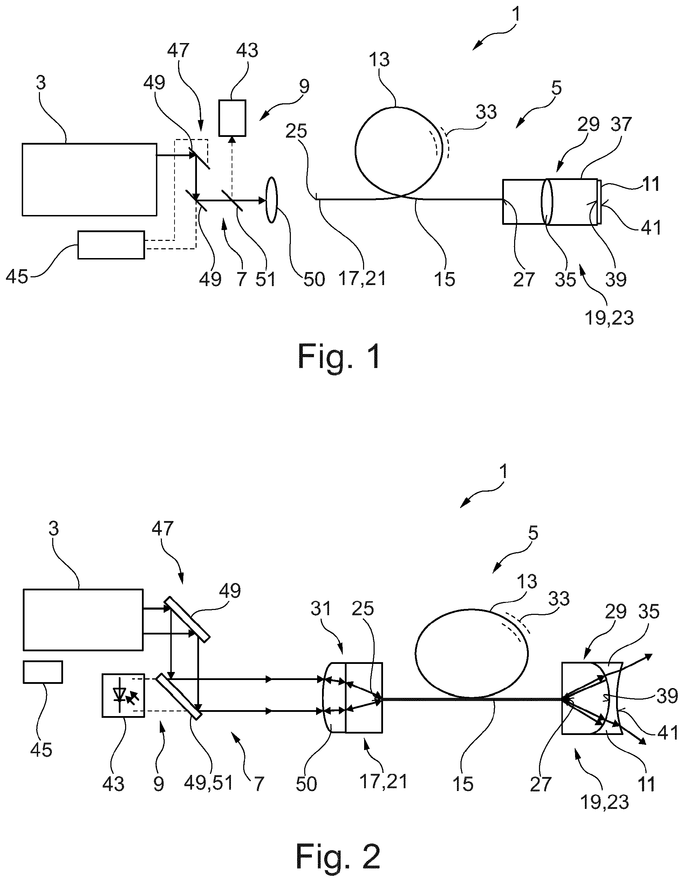

**Fig. 1** zeigt eine schematische Darstellung eines ersten Ausführungsbeispiels eines Lasersystems 1, dass eine Laserstrahlungsquelle 3 zur Emission von Nutzlicht sowie ein erstes Ausführungsbeispiel einer Lichtleitfasereinheit 5 aufweist. Die Laserstrahlungsquelle 3 ist insbesondere als Laser, vorzugsweise als Ultrakurzpulslaser ausgebildet. Außerdem weist das Lasersystem 1 eine Koppeleinrichtung 7 zum Einkoppeln des Nutzlichts in die Lichtleitfasereinheit 5 auf. Weiterhin weist das Lasersystem 1 eine Messeinrichtung 9 auf, die eingerichtet ist, um einen von einem Reflexelement 11 der Lichtleitfasereinheit 5 abgelenkten Teil des Nutzlichts zu erfassen. Vorzugsweise ist die Messeinrichtung 9 eingerichtet, um eine Einkoppelgüte der Einkopplung des Nutzlichts in die Lichtleitfasereinheit 5 anhand des erfassten Teils des Nutzlichts zu beurteilen.

Die Lichtleitfasereinheit 5 weist eine Lichtleitfaser 13 auf, die einen zum Führen von Nutzlicht durch die Lichtleitfaser 13 eingerichteten Lichtleitbereich 15 und an einem ersten Faserende 17, das ein Einkoppelende 21 ist, eine erste Faserendfläche 25 zur Einkopplung von Laserlicht in den Lichtleitbereich 15, und an einem zweiten Faserende 19, das ein Auskoppelende 23 ist, eine zweite Faserendfläche 27 zur Auskopplung von Laserlicht aus dem Lichtleitbereich 15 aufweist.

An einem ersten Faserende 17, 19, ausgewählt aus dem Einkoppelende 21 und dem Auskoppelende 23, ist ein erstes Endstück 29 derart angeordnet, dass Laserlicht durch das erste Endstück 29 hindurch in den Lichtleitbereich 15 eingekoppelt oder aus dem Lichtleitbereich 15 ausgekoppelt werden kann. Das erste Endstück 29 weist das Reflexelement 11 auf, das eingerichtet ist, um einen Teil des durch den Lichtleitbereich 15 entlang seiner Propagationsrichtung propagierenden Nutzlichts von der Propagationsrichtung abzulenken. Dieser abgelenkte Teil des Nutzlichts kann letztlich durch die Messeinrichtung 9 erfasst und vorteilhaft zur Beurteilung der Einkoppelgüte genutzt werden. Dabei ist insbesondere eine sehr stabile und reproduzierbare Beurteilung der Einkoppelgüte möglich, wobei insbesondere auch die Strahlqualität erfasst wird, wobei insbesondere die Ausbildung eines Leistungsplateaus vermieden ist.

In bevorzugter Ausgestaltung weist die Lichtleitfaser 13 einen hier nur schematisch angedeuteten Mantelbereich 33 auf, der den Lichtleitbereich 15 in Umfangsrichtung umgreift.

Das erste Endstück 29 ist bei dem hier dargestellten Ausführungsbeispiel an dem Auskoppelende 23 angeordnet. Das Reflexelement 11 ist eingerichtet, um den Reflex des Nutzlichts entgegen der Propagationsrichtung zurück in den Lichtleitbereich 15 einzukoppeln.

Das erste Endstück 29 weist außerdem ein optisches Strahlformungselement 35, hier in Form einer Linse, insbesondere einer Kollimationslinse, auf. Das optische Strahlformungselement 35 ist zur Strahlformung des Nutzlichts, insbesondere zu dessen Auskopplung aus dem Lichtleitbereich 15 sowie zur Kollimation des Nutzlichts vorgesehen. Das Reflexelement 11 ist zusätzlich zu dem optischen Strahlformungselement 35 an dem ersten Endstück 29 angeordnet.

Das Reflexelement 11 ist bevorzugt unlösbar an dem ersten Endstück 29 befestigt, insbesondere durch Schweißen oder Kleben, vorzugsweise wasser- und/oder gasdicht, wobei bevorzugt das Reflexelement 11 vermittelt über ein Befestigungsrohr 37 an dem ersten Endstück 29 befestigt ist.

Das Reflexelement 11 ist hier bevorzugt als plan-parallele Platte ausgebildet. Alternativ ist es möglich, dass das Reflexelement 11 als Fenster ausgebildet ist.

Die Lichtleitfaser 13 ist bevorzugt als photonische Kristallfaser mit hohlem Kern, als photonische Bandlücken-Faser, als Antiresonante Faser, insbesondere Tubularfaser, oder als gehemmte Kopplungsfaser, insbesondere Kagoméfaser, ausgebildet.

Das Endstück 29 ist bei dem hier dargestellten ersten Ausführungsbeispiel bevorzugt als Endkappe ausgebildet, insbesondere als hohle Endkappe. Insbesondere ist das Endstück 29 als Endkappe mit Ergänzungsstück ausgebildet, wobei insbesondere das Befestigungsrohr 37 das Ergänzungsstück ist. Alternativ ist es möglich, dass das Endstück 29 als Stecker, insbesondere als LWL-Stecker oder LWL-Steckverbindung, oder LLK-Stecker oder LLK-Steckverbinder, ausgebildet ist.

Das Reflexelement 11 ist an einer bezüglich der Propagationsrichtung des Nutzlichts vorderen Stirnfläche 39 mit einer ersten Antireflexbeschichtung versehen, die einen ersten Reflexionsgrad aufweist. Das Reflexelement 11 ist an einer bezüglich der Propagationsrichtung des Nutzlichts rückwärtigen Stirnfläche 41 mit einer zweiten Antireflexbeschichtung versehen, die einen zweiten Reflexionsgrad aufweist. Der erste Reflexionsgrad ist größer als der zweite Reflexionsgrad. Vorzugsweise ist der Reflexionsgrad an der vorderen Stirnfläche 39 insbesondere im Vergleich zu typischerweise verwendeten Antireflexbeschichtungen erhöht, um einen definierten, für eine aussagekräftige Messung der Einkoppelgüte verwendbaren Rückreflex zu erzeugen. An der rückwärtigen Stirnfläche 41 weist das Reflexelement 11 bevorzugt demgegenüber einen für Antireflexbeschichtungen üblichen Reflexionsgrad auf, sodass vorteilhaft Leistungsverluste minimiert, insbesondere unnötige Leistungsverluste vermieden werden. Erfindungsgemäß beträgt der erste Reflexionsgrad von mindestens 0,3 % bis höchstens 2 %, und in Ausgestaltungen, die nicht unter die Ansprüche fallen, beträgt er von mindestens 0,1 % bis höchstens 1 %, vorzugsweise von mindestens 0,5 % bis höchstens 1 %, vorzugsweise von mindestens 0,1 % bis höchstens 0,5 %. Der zweite Reflexionsgrad beträgt erfindungsgemäß höchstens 0,2 %, vorzugsweise höchstens 0,1 %.

Die Messeinrichtung 9 weist bevorzugt eine Lichtmesseinrichtung 43 auf, die eingerichtet ist, um eine Lichtleistung und/oder ein Modenprofil des erfassten Teils des Nutzlichts zu erfassen. Die Lichtmesseinrichtung 43 ist in bevorzugter Ausgestaltung als Kamera oder als Photodiode ausgebildet.

Die Messeinrichtung 9 weist außerdem bevorzugt eine Steuereinrichtung 45 auf. Die Koppeleinrichtung 7 weist bevorzugt eine ansteuerbare Justiereinrichtung 47 zum Justieren der Einkopplung des Nutzlichts in die Lichtleitfasereinheit 5 auf. Die Steuereinrichtung 45 ist mit der Justiereirichtung 47 wirkverbunden und eingerichtet, um die Justiereinrichtung 47 in Abhängigkeit von dem erfassten Teil des Nutzlichts anzusteuern. In bevorzugter Ausgestaltung weist die Justiereinrichtung 47 zwei motorisierte Spiegelhalter 49 auf, die durch die Steuereinrichtung 45 für eine automatische Justage der Einkopplung angesteuert werden können. Alternativ kann auch eine Einkoppellinse 50 einstellbar, insbesondere justierbar ausgebildet und durch die Steuereinrichtung 45 für eine automatische Justage der Einkopplung ansteuerbar sein.

Bei dem hier dargestellten Ausführungsbeispiel weist die Messeinrichtung 9 außerdem noch ein optisches Umlenkelement 51 auf, um den von dem Reflexelement 11 zurückreflektieren Teil des Nutzlichts auf die Lichtmesseinrichtung 43 umzulenken. Das Umlenkelement 51 kann in besonders einfacher Ausgestaltung als Messspiegel ausgebildet sein, wobei durch geeignete Beschichtung einer Vorderseite und einer Rückseite des Umlenkelements 51 gewährleistet ist, dass das Nutzlicht den Messspiegel in Propagationsrichtung nahezu unvermindert passieren kann, wobei jedoch der Rückreflex mit ausreichender Intensität auf die Lichtmesseinrichtung 43 gelenkt wird. Insbesondere werden bevorzugt in Propagationsrichtung 99 % des Nutzlichts durchgelassen, und ein Anteil von 1 % des Rückreflexes wird auf die Lichtmesseinrichtung 43 reflektiert. In alternativer Ausgestaltung kann das Umlenkelement 51 auch als Dünnschichtpolarisator ausgebildet sein, wobei eine hier nicht dargestellte λ/2-Platte die Polarisation des Rückreflexes auf dem Rückweg dreht.

**Fig. 2** zeigt eine schematische Darstellung eines zweiten Ausführungsbeispiels des Lasersystems 1 mit einem zweiten Ausführungsbeispiel der Lichtleitfasereinheit 5. Gleiche und funktionsgleiche Elemente sind in allen Figuren mit gleichen Bezugszeichen versehen, sodass insoweit jeweils auf die vorangegangene Beschreibung verwiesen wird.

Bei diesem zweiten Ausführungsbeispiel der Lichtleitfasereinheit 5 ist das Reflexelement 11 als Strahlformungselement 35 ausgebildet, insbesondere als Linse, hier insbesondere als Zerstreuungslinse. Es bedarf dann keines separaten Reflexelements 11, sodass diese Ausgestaltung besonders kompakt ist. Das Strahlformungselement 35 kann alternativ auch als Kollimationslinse, als diffraktives optisches Element, als Wellenplatte, als Axicon, oder als Keil ausgebildet sein.

Außerdem ist an einem zweiten Faserende 17, 19, ausgewählt aus dem Einkoppelende 21 und dem Auskoppelende 23, hier an dem Einkoppelende 21, ein zweites Endstück 31 angeordnet. Laserlicht kann durch das zweite Endstück 31 hindurch in den Lichtleitbereich 15 eingekoppelt werden.

Das Umlenkelement 51 wird hier in besonders kompakter Weise durch einen in dem zweiten Spiegelhalter 49 gehaltenen, teiltransparenten Justierspiegel gebildet. Es kann aber auch separat und zusätzlich zu diesem vorgesehen sein.

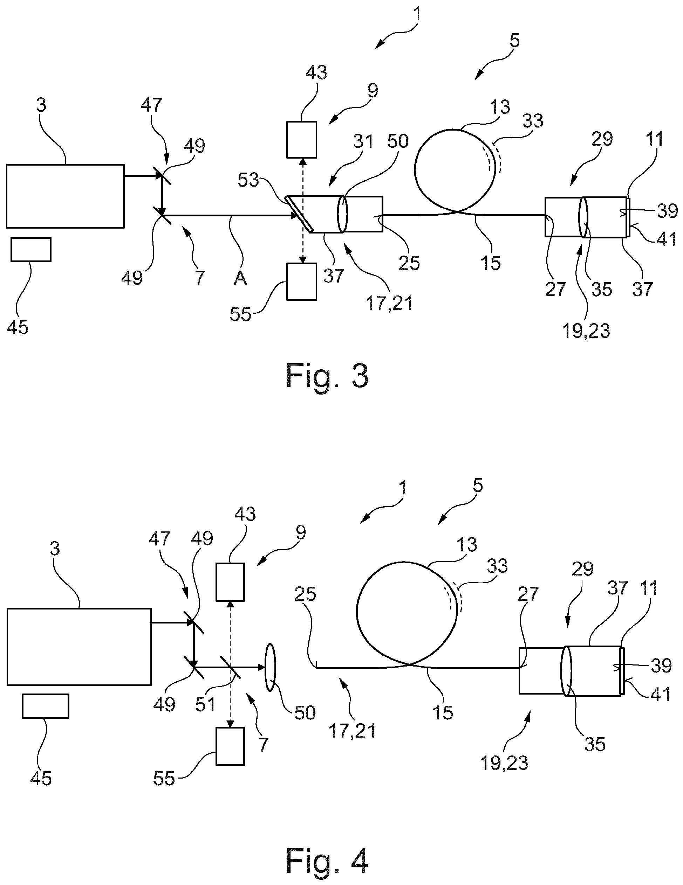

Das Umlenkelement 51 kann zusätzlich verwendet werden, um zum Zweck der Prozessüberwachung ein Maß für die eingekoppelte Leistung mittels einer zusätzlichen Lichtmesseinrichtung zu erfassen. Die Prozessüberwachung wird in Zusammenhang mit Figur 3 näher erläutert.

**Fig. 3** zeigt eine schematische Darstellung eines dritten Ausführungsbeispiels des Lasersystems 1 mit einem dritten Ausführungsbeispiel der Lichtleitfasereinheit 5. Wie bei dem ersten Ausführungsbeispiel ist hier das erste Endstück 29 an dem Auskoppelende 23 angeordnet, und das Reflexelement 11 ist eingerichtet, um einen Reflex des Nutzlichts entgegen der Propagationsrichtung zurück in den Lichtleitbereich 15 einzukoppeln. Zusätzlich ist aber das zweite Endstück 31 an dem Einkoppelende 21 angeordnet, und das zweite Endstück 31 weist ein Messreflexelement 53 auf, das eingerichtet ist, um den durch den Lichtleitbereich 15 zurückgeführten Reflex des Nutzlichts von einer Strahlachse A des Nutzlichts in einem hier als zweiten Winkel bezeichneten bestimmten Winkel, insbesondere in Richtung der Messeinrichtung 43, abzulenken. Es bedarf insbesondere nicht des optischen Umlenkelements 51, sodass diese Ausgestaltung besonders kompakt ist.

Es kann außerdem durch das Messreflexelement 53 zusätzlich auch ein Reflex des in Propagationsrichtung einfallenden Nutzlichts einkoppelseitig in Richtung einer zusätzlichen Lichtmesseinrichtung 55 abgelenkt werden.

Das Messreflexelement 53 kann aber auch verwendet werden, um eine Prozessüberwachung durchzuführen, indem Prozesslicht durch die Lichtmesseinrichtung 43 erfasst wird. Zugleich kann ein Maß für die eingekoppelte Leistung mittels der zusätzlichen Lichtmesseinrichtung 55 erfasst werden, wobei ein Vergleich der erfassten Prozesslichtleistung mit der eingekoppelten Leistung zur Beurteilung des Arbeitsprozesses herangezogen werden kann. Die zusätzliche Lichtmesseinrichtung 55 ist bevorzugt Teil der Messeinrichtung 9, wobei die Messeinrichtung 9 zusätzlich eingerichtet ist, um entsprechend den Arbeitsprozess zu beurteilen. Entsprechend kann ein Vergleich der Meßwerte der Lichtmesseinrichtung 43 einerseits und der zusätzlichen Lichtmesseinrichtung 55 andererseits auch zur optischen Faserbruchüberwachung verwendet werden.

**Fig. 4** zeigt eine schematische Darstellung eines vierten Ausführungsbeispiels des Lasersystems 1, wobei dieses wiederum das erste Ausführungsbeispiel der Lichtleitfasereinheit 5 gemäß Figur 1 aufweist. Auch bei diesem vierten Ausführungsbeispiel ist das erste Endstück 29 an dem Auskoppelende 23 angeordnet, wobei das Reflexelement 11 eingerichtet ist, um einen Reflex des Nutzlichts entgegen der Propagationsrichtung zurück in den Lichtleitbereich 15 einzukoppeln. Allerdings ist hier das optische Umlenkelement 51 so ausgestaltet, dass es neben der Funktion des Umlenkens des Rückreflexes auf die Lichtmesseinrichtung 43 auch noch die Funktion erfüllt, einen Reflex des in Propagationsrichtung einfallenden Nutzlichts einkoppelseitig in Richtung der zusätzlichen Lichtmesseinrichtung 55 abzulenken. Somit können auch bei diesem Ausführungsbeispiel die zusätzlichen Funktionen einer Prozessüberwachung und einer optischen Faserbruchüberwachung verwirklicht werden.

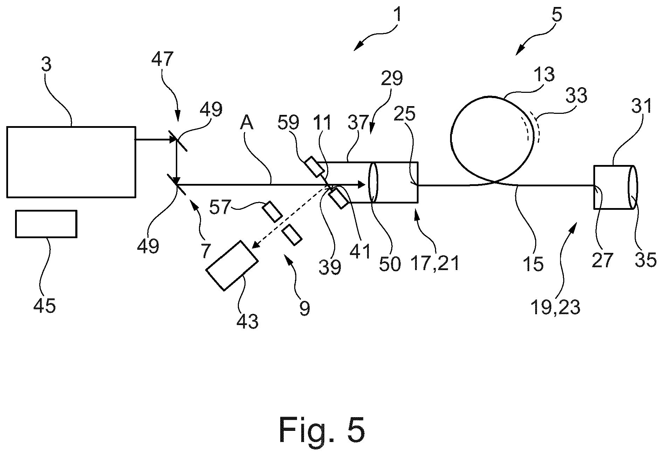

**Fig. 5** zeigt eine schematische Darstellung eines fünften Ausführungsbeispiel des Lasersystems 1 mit einem vierten Ausführungsbeispiel der Lichtleitfasereinheit 5. Bei diesem Ausführungsbeispiel ist das erste Endstück 29 an dem Einkoppelende 21 angeordnet, und das Reflexelement 11 ist eingerichtet, um einen Reflex des Nutzlichts von der Strahlachse A in einem hier als ersten Winkel bezeichneten bestimmten Winkel abzulenken. Das zweite Endstück 31 ist an dem Auskoppelende 23 angeordnet und weist lediglich das Strahlformungselement 35, insbesondere eine Kollimationslinse auf, aber kein Reflexelement 11. Die Lichtmesseinrichtung 43 ist hier bevorzugt als Kamera oder Photodiode, besonders bevorzugt als Photodiode mit vorgeschalteter Blende 57, oder als Quadrantendiode ausgebildet und insbesondere eingerichtet, um eine Orts- und Winkelabweichung zu erfassen, wobei der Strahlpfad des erfassten Teils des Nutzlichts bestimmungsgemäß den vorbestimmten Winkel mit der Propagationsrichtung, hier mit der Strahlachse A, einschließen soll, wenn die Einkopplung korrekt justiert ist. Eine fehlerhafte Justage der Einkopplung kann somit insbesondere durch Erfassung der Winkelabweichung von dem vorbestimmten Winkel festgestellt werden. Vorzugsweise ist zusätzlich an dem ersten Endstück 29 noch eine weitere Blende 59 angeordnet.

Im Rahmen eines Verfahrens zum Beurteilen der Einkoppelgüte der Einkopplung des Nutzlichts der Laserstrahlungsquelle 3 in die Lichtleitfasereinheit 5 wird bevorzugt ein Lasersystem 1 nach einem der zuvor beschriebenen Ausführungsbeispiele verwendet, wobei bevorzugt die Emission des Nutzlichts unterbunden wird, wenn eine Intensität des erfassten Teils des Nutzlichts unter einen vorbestimmten Schwellenwert abfällt. Insbesondere auf diese Weise kann eine optische Faserbruchüberwachung realisiert werden.

## Patentansprüche

1. Lichtleitfasereinheit (5) mit
- einer Lichtleitfaser (13), die einen zum Führen von Nutzlicht durch die Lichtleitfaser (13) eingerichteten Lichtleitbereich (15) und an einem Einkoppelende (21) als einem Faserende (17,19) eine erste Faserendfläche (25) zur Einkopplung von Laserlicht in den Lichtleitbereich (15) und an einem Auskoppelende (23) als einem anderen Faserende (17,19) eine zweite Faserendfläche (27) zur Auskopplung von Laserlicht aus dem Lichtleitbereich (15) aufweist, wobei
- an einem ersten Faserende (17,19), ausgewählt aus dem Einkoppelende (21) und dem Auskoppelende (23), ein erstes Endstück (29) derart angeordnet ist, dass Laserlicht durch das erste Endstück (29) hindurch in den Lichtleitbereich (15) eingekoppelt oder aus dem Lichtleitbereich (15) ausgekoppelt werden kann, und wobei
- das erste Endstück (19) ein Reflexelement (11) aufweist, das eingerichtet ist, um einen Teil von durch den Lichtleitbereich (15) entlang einer Propagationsrichtung propagierendem Nutzlicht von der Propagationsrichtung abzulenken,
wobei
- das Reflexelement (11) an einer bezüglich der Propagationsrichtung des Nutzlichts vorderen Stirnfläche (39) mit einer ersten Antireflexbeschichtung versehen ist, die einen ersten Reflexionsgrad aufweist,
**dadurch gekennzeichnet, dass** das Reflexelement (11) an einer bezüglich der Propagationsrichtung des Nutzlichts rückwärtigen Stirnfläche (41) mit einer zweiten Antireflexbeschichtung versehen ist, die einen zweiten Reflexionsgrad aufweist, wobei der erste Reflexionsgrad größer als der zweite Reflexionsgrad ist, wobei der erste Reflexionsgrad von mindestens 0,3 % bis höchstens 2 % beträgt, und wobei der zweite Reflexionsgrad höchstens 0,2 % beträgt.

2. Lichtleitfasereinheit (5) nach Anspruch 1, **dadurch gekennzeichnet, dass** die Lichtleitfaser (13) einen Mantelbereich (33) aufweist, der den Lichtleitbereich (15) in Umfangsrichtung umgreift.

3. Lichtleitfasereinheit (5) nach einem der vorhergehenden Ansprüche, **dadurch gekennzeichnet, dass** an einem zweiten Faserende (17,19) , ausgewählt aus dem Auskoppelende (23) und dem Einkoppelende (21), ein zweites Endstück (31) derart angeordnet ist, dass Laserlicht durch das zweite Endstück (31) hindurch in den Lichtleitbereich (15) eingekoppelt oder aus dem Lichtleitbereich (15) ausgekoppelt werden kann.

4. Lichtleitfasereinheit (5) nach einem der vorhergehenden Ansprüche, **dadurch gekennzeichnet, dass**
- das erste Endstück (29) an dem Auskoppelende (23) angeordnet ist, wobei das Reflexelement (11) eingerichtet ist, um einen Reflex des Nutzlichts entgegen der Propagationsrichtung zurück in den Lichtleitbereich (15) einzukoppeln, oder dass
- das erste Endstück (29) an dem Einkoppelende (21) angeordnet ist, wobei das Reflexelement (11) eingerichtet ist, um einen Reflex des Nutzlichts von einer Strahlachse (A) des Nutzlichts in einem ersten bestimmten Winkel abzulenken, oder dass
- das erste Endstück (29) an dem Auskoppelende (23) angeordnet ist, wobei das Reflexelement (11) eingerichtet ist, um einen Reflex des Nutzlichts entgegen der Propagationsrichtung zurück in den Lichtleitbereich (15) einzukoppeln, wobei das zweite Endstück (31) an dem Einkoppelende (21) angeordnet ist und ein weiteres Reflexelement aufweist, wobei das weitere Reflexelement eingerichtet ist, um einen Reflex des Nutzlichts von einer Strahlachse (A) des Nutzlichts in einem ersten bestimmten Winkel abzulenken.

5. Lichtleitfasereinheit (5) nach einem der Ansprüche 1 bis 3, **dadurch gekennzeichnet, dass**
- das erste Endstück (29) an dem Auskoppelende (23) angeordnet ist, wobei das Reflexelement (11) eingerichtet ist, um einen Reflex des Nutzlichts entgegen der Propagationsrichtung zurück in den Lichtleitbereich (15) einzukoppeln, wobei
- das zweite Endstück (31) an dem Einkoppelende (21) angeordnet ist und ein Messreflexelement (53) aufweist, das eingerichtet ist, um den durch den Lichtleitbereich (15) zurückgeführten Reflex des Nutzlichts von einer Strahlachse (A) des Nutzlichts in einem zweiten bestimmten Winkel, insbesondere in Richtung einer Messeinrichtung (9), abzulenken.

6. Lichtleitfasereinheit (5) nach einem der vorhergehenden Ansprüche, **dadurch gekennzeichnet, dass** das erste Endstück (29) ein optisches Strahlformungselement (35) zur Strahlformung des Nutzlichts aufweist, wobei das Reflexelement (11) zusätzlich zu dem optischen Strahlformungselement (35) an dem ersten Endstück (29) angeordnet ist.

7. Lichtleitfasereinheit (5) nach einem der vorhergehenden Ansprüche, **dadurch gekennzeichnet, dass** das Reflexelement (11) unlösbar an dem ersten Endstück (29) befestigt ist, insbesondere durch Schweißen oder Kleben, vorzugsweise wasser- und/oder gasdicht, wobei bevorzugt das Reflexelement (11) vermittelt über ein Befestigungsrohr (37) an dem ersten Endstück (29) befestigt ist.

8. Lichtleitfasereinheit (5) nach einem der vorhergehenden Ansprüche, **dadurch gekennzeichnet, dass** das Reflexelement (11) als ein Element ausgebildet ist, das ausgewählt ist aus einer Gruppe, bestehend aus: Einer plan-parallelen Platte; einem Fenster; und einem Strahlformungselement, insbesondere einer Linse, insbesondere Kollimationslinse oder Zerstreuungslinse, einem diffraktiven optischen Element, einer Wellenplatte, einem Axicon, oder einem Keil.

9. Lichtleitfasereinheit (5) nach einem der vorhergehenden Ansprüche, **dadurch gekennzeichnet, dass** die Lichtleitfaser (13) als photonische Kristallfaser mit hohlem Kern, als photonische Bandlücken-Faser, als Antiresonante Faser, insbesondere Tubularfaser, oder als gehemmte Kopplungsfaser, insbesondere Kagoméfaser, ausgebildet ist.

10. Lichtleitfasereinheit (5) nach einem der vorhergehenden Ansprüche, **dadurch gekennzeichnet, dass** wenigstens ein Endstück (29,31), ausgewählt aus dem ersten Endstück (29) und dem zweiten Endstück (31), als
- Endkappe, insbesondere als hohle Endkappe,
- Endkappe mit Ergänzungsstück, oder
- Stecker
ausgebildet ist.

11. Lasersystem (1) mit
- einer Laserstrahlungsquelle (3) zur Emission von Nutzlicht,
- einer Lichtleitfasereinheit (5) nach einem der Ansprüche 1 bis 10,
- einer Koppeleinrichtung (7) zum Einkoppeln des Nutzlichts in die Lichtleitfasereinheit (5), und mit
- einer Messeinrichtung (9), die eingerichtet ist, um den von dem Reflexelement (11) abgelenkten Teil des Nutzlichts zu erfassen, und vorzugsweise um eine Einkoppelgüte der Einkopplung des Nutzlichts in die Lichtleitfasereinheit (5) anhand des erfassten Teils des Nutzlichts zu beurteilen.

12. Lasersystem (1) nach Anspruch 11, **dadurch gekennzeichnet, dass** die Messeinrichtung (9) eine Lichtmesseinrichtung (43) aufweist, insbesondere eine Kamera, eine Photodiode, vorzugsweise mit vorgeschalteter Blende, oder Quadrantendiode, wobei die Lichtmesseinrichtung (43) eingerichtet ist, um eine Lichtleistung und/oder ein Modenprofil des erfassten Teils des Nutzlichts, und/oder eine Winkelabweichung von einem vorbestimmten Winkel, den ein Strahlpfad des erfassten Teils des Nutzlichts bestimmungsgemäß mit der Propagationsrichtung einschließen soll, zu erfassen.

13. Lasersystem (1) nach einem der Ansprüche 11 oder 12, **dadurch gekennzeichnet, dass** die Messeinrichtung (9) eine Steuereinrichtung (45) aufweist, wobei die Koppeleinrichtung (7) eine ansteuerbare Justiereinrichtung (47) zum Justieren der Einkopplung des Nutzlichts in die Lichtleitfasereinheit (5) aufweist, wobei die Steuereinrichtung (45) mit der Justiereinrichtung (47) wirkverbunden und eingerichtet ist, um die Justiereinrichtung (47) in Abhängigkeit von dem erfassten Teil des Nutzlichts anzusteuern.

14. Lasersystem (1) nach einem der Ansprüche 11 bis 13, **dadurch gekennzeichnet, dass** die Messeinrichtung (9) zusätzlich eingerichtet ist, um einen weiteren, vor dem Einkoppeln in die Lichtleitfasereinheit (5) von einem Strahlpfad des Nutzlichts weggeleiteten Teil des Nutzlichts zu erfassen, wobei die Messeinrichtung (9) weiter eingerichtet ist, um einen unter Verwendung des Nutzlichts mit dem Lasersystem (1) durchgeführten Bearbeitungsprozess anhand des erfassten Teils des Nutzlichts oder Prozesslichts und des erfassten weiteren Teils des Nutzlichts zu beurteilen.

15. Verfahren zum Beurteilen einer Einkoppelgüte der Einkopplung von Nutzlicht einer Laserstrahlungsquelle (3) in eine Lichtleitfasereinheit (5), wobei ein Lasersystem (1) nach einem der Ansprüche 11 bis 14 verwendet wird, und wobei vorzugsweise die Emission des Nutzlichts unterbunden wird, wenn eine Intensität des erfassten Teils des Nutzlichts unter einen vorbestimmten Schwellenwert abfällt.

## Claims

1. An optical fiber unit (5) comprising
- an optical fiber (13) having a light guiding region (15) configured to guide useful light through the optical fiber (13), and a first fiber end surface (25), at an input coupling end (21) as a fiber end (17, 19), for coupling laser light into the light guiding region (15), and a second fiber end surface (27), at an output coupling end (23) as another fiber end (17, 19), for coupling the laser light out of the light guiding region (15), wherein
- a first end piece (29) is arranged on a first fiber end (17, 19), selected from the input coupling end (21) and the output coupling end (23), in such a way that laser light can be coupled into the light guiding region (15) or coupled out of the light guiding region (15) through the first end piece (29), and wherein
- the first end piece (19) has a reflection element (11) configured to divert a portion of the useful light that is propagating through the light guiding region (15) along a direction of propagation away from said direction of propagation, wherein
- the reflection element (11) is provided with a first anti-reflection coating on a front end face (39), relative to the direction of propagation of the useful light, the coating having a first reflectance,
**characterized in that** the reflection element (11) is provided with a second anti-reflection coating on a rear end face (41), relative to the direction of propagation of the useful light, the coating having a second reflectance, wherein the first reflectance is greater than the second reflectance, wherein the first reflectance is at least 0.3 % to at most 2 %, and wherein the second reflectance is at most 0.2 %.

2. The optical fiber unit (5) according to claim 1, **characterized in that** the optical fiber (13) has a cladding region (33) that encompasses the light guiding region (15) in the circumferential direction.

3. The optical fiber unit (5) according to any one of the preceding claims, **characterized in that** a second end piece (31) is arranged on a second fiber end (17, 19), selected from the output coupling end (23) and the input coupling end (21), in such a way that laser light can be coupled into the light guiding region (15) or coupled out of the light guiding region (15) through the second end piece (31).

4. The optical fiber unit (5) according to any one of the preceding claims, **characterized in that**
- the first end piece (29) is arranged on the output coupling end (23), wherein the reflection element (11) is configured to couple a reflection of the useful light opposite to the direction of propagation back into the light guiding region (15), or that
- the first end piece (29) is arranged on the input coupling end (21), wherein the reflection element (11) is configured to divert a reflection of the useful light from a beam axis (A) of the useful light in a first defined angle, or that
- the first end piece (29) is arranged on the output coupling end (23), wherein the reflection element (11) is configured to couple a reflection of the useful light opposite to the direction of propagation back into the light guiding region (15), wherein the second end piece (31) is arranged on the input coupling end (21) and has a further reflection element, wherein the further reflection element is configured to divert a reflection of the useful light from a beam axis (A) of the useful light in a first defined angle.

5. The optical fiber unit (5) according to any one of claims 1 to 3, **characterized in that**
- the first end piece (29) is arranged on the output coupling end (23), wherein the reflection element (11) is configured to couple a reflection of the useful light opposite to the direction of propagation back into the light guiding region (15), wherein
- the second end piece (31) is arranged on the input coupling end (21) and has a measuring reflection element (53) configured to divert, from a beam axis (A) of the useful light in a second defined angle, in particular in the direction of a measuring device (9), the reflection of the useful light that was returned through the light guiding region (15).

6. The optical fiber unit (5) according to any one of the preceding claims, **characterized in that** the first end piece (29) has an optical beam shaping element (35) for shaping the beam of the useful light, wherein the reflection element (11) is arranged on the first end piece (29) in addition to the optical beam shaping element (35).

7. The optical fiber unit (5) according to any one of the preceding claims, **characterized in that** the reflection element (11) is fastened non-detachably on the first end piece (29), in particular by welding or by adhesion, preferably water-tight and/or gas-tight, wherein the reflection element (11) preferably is fastened on the first end piece (29) mediately via a fastening pipe (37).

8. The optical fiber unit (5) according to any one of the preceding claims, **characterized in that** the reflection element (11) is designed as an element selected from a group consisting of: a plane-parallel plate; a window; and a beam shaping element, in particular a lens, in particular a collimating lens or a diverging lens, a diffractive optical element, a waveplate, an axicon, or a wedge.

9. The optical fiber unit (5) according to any one of the preceding claims, **characterized in that** the optical fiber (13) is designed as a hollow-core photonic crystal fiber, as a photonic band gap fiber, as an anti-resonant fiber, in particular a tubular fiber, or as an inhibited coupling fiber, in particular a Kagomé fiber.

10. The optical fiber unit (5) according to any one of the preceding claims, **characterized in that** at least one end piece (29, 31), selected from the first end piece (29) and the second end piece (31), is designed as
- an end cap, in particular as a hollow end cap,
- an end cap with a supplementary piece, or
- a plug.

11. A laser system (1), comprising
- a laser radiation source (3) for emitting useful light,
- an optical fiber unit (5) according to any one of claims 1 to 10,
- a coupling device (7) for coupling the useful light into the optical fiber unit (5), and comprising
- a measuring device (9) configured to capture the portion of the useful light diverted by the reflection element (11) and preferably to assess an input coupling quality of the coupling of the useful light into the optical fiber unit (5) based on the captured portion of the useful light.

12. The laser system (1) according to claim 11, **characterized in that** the measuring device (9) has a light measuring device (43), in particular a camera, a photodiode, preferably with an upstream aperture, or a quadrant photodiode, wherein the light measuring device (43) is configured to capture a light power and/or a mode profile of the captured portion of the useful light, and/or to capture an angular deviation from a predetermined angle which a beam path of the captured portion of the useful light is intentionally meant to include with the direction of propagation.

13. The laser system (1) according to one of claims 11 or 12, **characterized in that** the measuring device (9) has a control device (45), wherein the coupling device (7) has a controllable aligning device (47) for aligning the coupling of the useful light into the optical fiber unit (5), wherein the control device (45) is operatively connected to the aligning device (47) and is configured to control the aligning device (47) depending on the captured portion of the useful light.

14. The laser system (1) according to any one of claims 11 to 13, **characterized in that,** in addition, the measuring device (9) is configured to capture a further portion of the useful light that is guided away from a beam path of the useful light before the coupling into the optical fiber unit (5), wherein the measuring device (9) is further configured to assess a machining process performed with the laser system (1) using the useful light, the assessment being based on the captured portion of the useful light or of the process light and based on the captured further portion of the useful light.

15. A method for assessing an input coupling quality of the coupling of useful light of a laser radiation source (3) into an optical fiber unit (5), wherein a laser system (1) according to any one of claims 11 to 14 is used, and wherein the emission of the useful light is preferably suppressed if an intensity of the captured portion of the useful light falls below a predetermined threshold value.

## Revendications

1. Unité à fibre optique (5) comportant
- une fibre optique (13), comprenant une zone de guidage de lumière (15) configurée pour guider une lumière utile à travers la fibre optique (13) et, à une extrémité de couplage (21) qui est une extrémité de fibre (17, 19), une première face d'extrémité de fibre (25) destinée à coupler une lumière laser dans la zone de guidage de lumière (15) et, à une extrémité de découplage (23) qui est une autre extrémité de fibre (17, 19), une deuxième face d'extrémité de fibre (27) destinée à découpler la lumière laser hors de la zone de guidage de lumière (15), dans laquelle
- à une première extrémité de fibre (17, 19), sélectionnée parmi l'extrémité de couplage (21) et l'extrémité de découplage (23), une première pièce d'extrémité (29) est agencée de manière à ce que la lumière laser puisse être couplée à travers la première pièce d'extrémité (29) dans la zone de guidage de lumière (15) ou découplée hors de la zone de guidage de lumière (15), et dans laquelle
- la première pièce d'extrémité (19) comporte un élément réfléchissant (11) configuré pour défléchir une partie de la lumière utile se propageant à travers la zone de guidage de lumière (15) selon une direction de propagation par rapport à la direction de propagation, dans laquelle
- l'élément réfléchissant (11) est pourvu sur une surface frontale (39) orientée vers l'avant par rapport à la direction de propagation de la lumière utile, d'un premier revêtement anti-réfléchissant qui présente une première réflectance, **caractérisée en ce que** l'élément réfléchissant (11) est pourvu, sur une surface frontale (41) orientée vers l'arrière par rapport à la direction de propagation de la lumière utile, d'un deuxième revêtement anti-réfléchissant qui présente une deuxième réflectance, dans laquelle la première réflectance est supérieure à la deuxième réflectance, dans laquelle la première réflectance est d'au moins 0,3 % à au plus 2 %, et dans laquelle la deuxième réflectance est d'au plus 0,2 %.

2. Unité à fibre optique (5) selon la revendication 1, **caractérisée en ce que** la fibre optique (13) comporte une zone de gaine (33) qui entoure la zone de guidage de lumière (15) en direction circonférentielle.

3. Unité à fibre optique (5) selon l'une des revendications précédentes, **caractérisée en ce qu'**une deuxième pièce d'extrémité (31) est agencée à une deuxième extrémité de fibre (17, 19), sélectionnée parmi l'extrémité de découplage (23) et l'extrémité de couplage (21), de sorte que de la lumière laser puisse être couplée dans la zone de guidage de lumière (15) ou puisse être découplée de la zone de guidage de lumière (15) à travers la deuxième pièce d'extrémité (31).

4. Unité à fibre optique (5) selon l'une des revendications précédentes, **caractérisée en ce que**
- la première pièce d'extrémité (29) est agencée à l'extrémité de découplage (23), dans laquelle l'élément réfléchissant (11) est configuré pour coupler une réflexion de la lumière utile afin de la renvoyer dans la zone de guidage de lumière (15) en sens inverse à la direction de propagation, ou **en ce que**
- la première pièce d'extrémité (29) est agencée à l'extrémité de couplage (21), dans laquelle l'élément réfléchissant (11) est configuré pour défléchir la réflexion de la lumière utile provenant d'un axe de faisceau (A) de la lumière utile selon un premier angle déterminé, ou **en ce que**
- la première pièce d'extrémité (29) est agencée à l'extrémité de découplage (23), dans laquelle l'élément réfléchissant (11) est configuré pour coupler une réflexion de la lumière utile afin de la renvoyer dans la zone de guidage de lumière (15) en sens inverse à la direction de propagation, dans laquelle la deuxième pièce d'extrémité (31) est agencée à l'extrémité de couplage (21) et comporte un élément réfléchissant additionnel, dans laquelle l'élément réfléchissant additionnel est configuré pour défléchir une réflexion de la lumière utile par rapport à un axe de faisceau (A) de la lumière utile selon un premier angle déterminé.

5. Unité à fibre optique (5) selon l'une des revendications 1 à 3, **caractérisée en ce que**
- la première pièce d'extrémité (29) est agencée à l'extrémité de découplage (23), dans laquelle l'élément réfléchissant (11) est configuré pour coupler une réflexion de la lumière utile afin de la renvoyer dans la zone de guidage de lumière (15) en sens inverse à la direction de propagation, dans laquelle
- la deuxième pièce d'extrémité (31) est agencée à l'extrémité de couplage (21) et comporte un élément réfléchissant de mesure (53) configuré pour défléchir la réflexion de la lumière utile renvoyée à travers la zone de guidage de lumière (15) par rapport à un axe de faisceau (A) de la lumière utile selon un deuxième angle déterminé, en particulier en direction d'un dispositif de mesure (9).

6. Unité à fibre optique (5) selon l'une des revendications précédentes, **caractérisée en ce que** la première pièce d'extrémité (29) comporte un élément de formation de faisceau optique (35) pour former un faisceau de lumière utile, dans laquelle l'élément réfléchissant (11) est agencé sur la première pièce d'extrémité (29) en plus de l'élément de formation de faisceau optique (35).

7. Unité à fibre optique (5) selon l'une des revendications précédentes, **caractérisée en ce que** l'élément réfléchissant (11) est fixé de manière inamovible à la première pièce d'extrémité (29), en particulier par soudage ou collage, de préférence de manière étanche à l'eau et/ou aux gaz, dans laquelle de préférence l'élément réfléchissant (11) est fixé à la première pièce d'extrémité (29) via un tube de fixation (37).

8. Unité à fibre optique (5) selon l'une des revendications précédentes, **caractérisée en ce que** l'élément réfléchissant (11) est conformé comme un élément sélectionné dans un groupe constitué par : une plaque parallèle à un plan ; une fenêtre ; et un élément de formation de faisceau, en particulier une lentille, en particulier une lentille collimatrice ou une lentille divergente, un élément optique de diffraction, une lame à retard, un axicon ou un prisme cale.

9. Unité à fibre optique (5) selon l'une des revendications précédentes, **caractérisée en ce que** la fibre optique (13) est conformée comme une fibre à cristal photonique à âme creuse, comme une fibre à bande photonique interdite, comme une fibre antirésonante, en particulier une fibre tubulaire, ou comme une fibre à couplage inhibé, en particulier une fibre trihexagonale.

10. Unité à fibre optique (5) selon l'une des revendications précédentes, **caractérisée en ce qu'au** moins une pièce d'extrémité (29, 31), sélectionnée parmi la première pièce d'extrémité (29) et la deuxième pièce d'extrémité (31), est configurée comme
- un capuchon d'extrémité, en particulier un capuchon d'extrémité creux,
- un capuchon d'extrémité avec une pièce supplémentaire, ou
- un connecteur.

11. Système laser (1) comportant
- une source de rayonnement laser (3) pour l'émission de lumière utile,
- une unité à fibre optique (5) selon l'une des revendications 1 à 10,
- un dispositif de couplage (7) pour coupler la lumière utile à l'unité à fibre optique (5), et
- un dispositif de mesure (9) configuré pour détecter la partie de la lumière utile défléchie par l'élément réfléchissant (11), et de préférence pour évaluer la qualité du couplage de la lumière utile dans l'unité à fibre optique (5) sur la base de la partie détectée de la lumière utile.

12. Système laser (1) selon la revendication 11, **caractérisé en ce que** le dispositif de mesure (9) comprend un dispositif de mesure de la lumière (43), en particulier une caméra, une photodiode, de préférence avec un diaphragme placé en amont, ou une photodiode à quadrants, dans lequel le dispositif de mesure de la lumière (43) est configuré pour détecter une intensité lumineuse et/ou un profil de mode de la partie détectée de la lumière utile, et/ou un écart angulaire par rapport à un angle prédéterminé qu'un chemin de faisceau de la partie détectée de la lumière utile doit inclure conformément à la direction de propagation.

13. Système laser (1) selon l'une des revendications 11 ou 12, **caractérisé en ce que** le dispositif de mesure (9) comporte un dispositif de commande (45), dans lequel le dispositif de couplage (7) comporte un dispositif de réglage (47) contrôlable pour régler le couplage de la lumière utile dans l'unité à fibre optique (5), dans lequel le dispositif de commande (45) est fonctionnellement connecté au dispositif de réglage (47) et est configuré pour commander le dispositif de réglage (47) en fonction de la partie détectée de la lumière utile.

14. Système laser (1) selon l'une des revendications 11 à 13, **caractérisé en ce que** le dispositif de mesure (9) est en outre configuré pour détecter une partie additionnelle de la lumière utile qui est défléchie du chemin du faisceau de la lumière utile avant le couplage dans l'unité à fibre optique (5), dans lequel le dispositif de mesure (9) est en outre configuré pour évaluer un processus de traitement effectué à l'aide de la lumière utile avec le système laser (1) sur la base de la partie détectée de la lumière utile ou de la lumière de processus et de la partie additionnelle détectée de la lumière utile.

15. Procédé d'évaluation de la qualité de couplage de la lumière utile provenant d'une source de rayonnement laser (3) dans une unité à fibre optique (5), dans lequel un système laser (1) selon l'une des revendications 11 à 14 est utilisé, et dans lequel l'émission de la lumière utile est de préférence supprimée quand l'intensité de la partie détectée de la lumière utile tombe en dessous d'une valeur seuil prédéterminée.
